(19) Europäisches Patentamt / European Patent Office / Office européen des brevets

(11) **EP 2 617 027 B1**

## (12) FASCICULE DE BREVET EUROPEEN

(45) Date de publication et mention de la délivrance du brevet:
**23.11.2016 Bulletin 2016/47**

(21) Numéro de dépôt: **11773073.9**

(22) Date de dépôt: **13.09.2011**

(51) Int Cl.:
**G10K 11/18** *(2006.01)*

(86) Numéro de dépôt international:
**PCT/FR2011/052089**

(87) Numéro de publication internationale:
**WO 2012/035252 (22.03.2012 Gazette 2012/12)**

(54) **STRUCTURE APTE À CANALISER UNE ONDE ÉLASTIQUE SE PROPAGEANT DANS UNE PLAQUE**

STRUKTUR ZUR KANALISIERUNG EINER AUSBREITUNG EINER ELASTISCHEN WELLE BEI EINER PLATTE

STRUCTURE THAT CAN CHANNEL AN ELASTIC WAVE PROPAGATING IN A PLATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2010 FR 1003671**

(43) Date de publication de la demande:
**24.07.2013 Bulletin 2013/30**

(73) Titulaires:
- **Centre National de la Recherche Scientifique 75016 Paris (FR)**
- **Universite Paul Cezanne Marseille III 13628 Aix-en-Provence Cedex I (FR)**
- **University Of Liverpool Liverpool L69 3GL (GB)**

(72) Inventeurs:
- **ENOCH, Stéphane F-13013 Marseille, (FR)**
- **FARHAT, Mohamed 23955-6900 THUWAL JEDDAH, (SA)**
- **GUENNEAU, Sébastien F-13007 Marseille, (FR)**
- **MOVCHAN, Alexander Liverpool L69 7ZL, (GB)**

(74) Mandataire: **de Roquemaurel, Bruno OMNIPAT 24 Place des Martyrs de la Résistance 13100 Aix en Provence (FR)**

(56) Documents cités:
**US-A1- 2008 024 792**

- **DANIEL TORRENT ET AL: "Acoustic cloaking in two dimensions: a feasible approach", NEW JOURNAL OF PHYSICS, INSTITUTE OF PHYSICS PUBLISHING, BRISTOL, GB, vol. 10, no. 6, 1 juin 2008 (2008-06-01), page 63015, XP020137829, ISSN: 1367-2630**
- **HUANYANG CHEN ET AL: "TOPICAL REVIEW; Acoustic cloaking and transformation acoustics", JOURNAL OF PHYSICS D. APPLIED PHYSICS, IOP PUBLISHING, BRISTOL, GB, vol. 43, no. 11, 24 mars 2010 (2010-03-24) , page 113001, XP020170972, ISSN: 0022-3727**
- **YAROSLAV URZHUMOV ET AL: "Acoustic cloaking transformations from attainable material properties", NEW JOURNAL OF PHYSICS, INSTITUTE OF PHYSICS PUBLISHING, BRISTOL, GB, vol. 12, no. 7, 1 juillet 2010 (2010-07-01), page 73014, XP020176349, ISSN: 1367-2630**

**Description**

La présente invention concerne le contrôle de la propagation d'ondes élastiques telles que les vibrations notamment dans les domaines de la mécanique et de la géologie. La présente invention concerne plus particulièrement la canalisation d'ondes élastiques transversales se propageant dans une plaque mince.

Récemment des progrès significatifs ont été réalisés dans le contrôle d'ondes électromagnétiques. Des transformations basées sur les équations de Maxwell dans un système de coordonnées cylindriques permettent de définir des structures aptes à canaliser les ondes électromagnétiques autour d'une région à dissimuler. Une telle structure également appelée "cape d'invisibilité" est un méta matériau présentant une perméabilité et une permittivité fortement hétérogènes et anisotrope permettant de canaliser les ondes électromagnétiques autour de la région à dissimuler. Le terme méta matériau désigne ici un matériau composite artificiel qui présente des propriétés physiques qu'on ne retrouve pas dans un matériau naturel. La perméabilité et la permittivité du méta matériau peuvent être déduites d'une transformation de système de coordonnées des équations de Maxwell.

La demande de brevet US 2008/0 024 792 décrit une transformation géométrique permettant de définir une cape d'invisibilité vis-à-vis de la lumière. Cette transformation géométrique conduit à des tenseurs de permittivité et de perméabilité, anisotropiques et variant dans l'espace, qui peuvent être approximés à l'aide d'une structure périodique comprenant des éléments structurels, tels que des anneaux concentriques coupés, appelés anneaux fendus ("split-ring resonators") ou en forme de "rouleau suisse". Les propriétés d'invisibilité de cette structure reposent sur la résonnance des éléments de la structure, et donc agit intrinsèquement dans une bande de fréquences limitée.

La demande de brevet US 2008/0 165 442 utilise la même transformation géométrique que dans la demande US 2008/0 024 792, mais propose d'approximer les tenseurs de permittivité et de perméabilité à l'aide d'autres éléments structurels présentant une perméabilité fixe, et présentant la forme simplifiée d'ellipsoïdes allongées métalliques.

La demande de brevet US 2009/0 218 523 propose d'utiliser des matériaux à gradient d'index pour approximer les tenseurs de permittivité et de perméabilité.

Contrairement aux équations de Maxwell, les équations de Navier décrivant la propagation des ondes élastiques ne restent pas invariantes par des transformations géométriques de système de coordonnées, décrites dans les documents précités. Il en résulte que ces transformations géométriques ne sont pas applicables aux équations de Navier. Toutefois, dans un système de coordonnées cylindriques, les équations relatives aux ondes transversales à leur plan de propagation, apparaissent dissociées des équations relatives aux ondes de compression et de cisaillement situées dans leur plan de propagation qui elles restent couplées. Le document [1] "Achieving control of in-plane elastic waves", M. Brun, S. Guenneau, et A. B. Movchan, Applied Physics Letters 94, 061903 (2009), décrit une structure cylindrique adaptée aux ondes élastiques situées dans leur plan de propagation. La propagation de ces ondes est décrite par un tenseur d'élasticité de quatrième rang (non symétrique) avec $2^4$ entrées cartésiennes, et une densité isotrope. Ce document montre que les propriétés requises d'un méta matériau capable de canaliser les ondes élastiques autour d'une zone cylindrique, font intervenir un tenseur élastique de quatrième rang et $3^4$ entrées cartésiennes variant dans l'espace. Cependant, dans le cas particulier d'une plaque mince, c'est-à-dire présentant de grandes longueur et largeur par rapport à son épaisseur, le tenseur élastique peut être représenté dans un système de coordonnées cylindriques par une matrice diagonale à deux entrées variant dans l'espace.

Le document [2] "Ultrabroadband Elastic Cloaking in Thin Plates", M. Farhat, S. Guenneau, S. Enoch, Physical Review Letters, PRL 103, 024301(2009) décrit une structure hétérogène anisotrope apte à canaliser les ondes élastiques transversales autour d'une zone à protéger d'une plaque mince. Cette structure est formée d'une pluralité de couches radiales symétriques ayant chacune un module de Young et une masse volumique constante. Pour déterminer le comportement de cette structure vis-à-vis d'ondes élastiques à contrôler, la longueur d'onde des ondes élastiques a été considérée très grande par rapport à l'épaisseur de la plaque et petite par rapport aux autres dimensions de la plaque, ce qui permet d'adopter les hypothèses de la théorie de von Karman ("Theory of plates and shells", S. Timoshenko, McGraw-Hill, New York, 1940, et "Wave motion in elastic solids", K. F. Graff, Dover, New York, 1975).

Le document "Acoustic cloaking in two dimensions: a feasible approach" Daniel Torrent et al., new journal of physics, 2008 décrit également un procédé pour canaliser des ondes élastiques transversales se propageant dans une plaque mince.

Dans un système de coordonnées cylindriques, un déplacement u(0, 0, U(r,θ)) de la plaque dans une direction x3 perpendiculaire au plan de la plaque est une solution de l'équation différentielle suivante :

$$\lambda \nabla \cdot \left\{ \zeta^{-1} \nabla \left[ \lambda \nabla \cdot \left( \zeta^{-1} \nabla U \right) \right] \right\} - \beta_0^4 U = 0 \qquad (1)$$

dans une zone protégée par la structure annulaire formée dans la plaque, centrée à l'origine des coordonnées. Dans l'équation (1) :

$$\lambda = \rho^{1/2}(r),$$

p étant la masse volumique de la structure annulaire,

$\varsigma$ étant égal à $E^{-1/2}$, E étant un module de Young du matériau de la plaque,

$\nabla$ étant l'opérateur nabla en coordonnées cylindriques $(\partial/\partial r, \frac{1}{r}\partial/\partial \theta)$, r $\beta_0^4 = \omega^2 \rho_0 h/D_0$, $\omega$ étant la pulsation des ondes élastiques, $\rho_0$ la masse volumique du matériau constituant la plaque, h l'épaisseur de la plaque, et $D_0$ la rigidité en flexion de la plaque.

On applique ensuite la transformation de coordonnées suivante :

$$r' = a + r(1 - a/b) \qquad (2)$$

dans laquelle a et b sont les rayons intérieur et extérieur de la structure annulaire centrée sur l'origine des coordonnées. Cette transformation permet de compresser la région telle que r < a dans l'anneau (a < r <b). Il en résulte qu'en choisissant une plaque ayant une masse volumique constante, par exemple $\rho_0$ =1, les composantes du module de Young et de la masse volumique de la structure présentent les valeurs suivantes :

$$E_r = \left(\frac{b}{b-a}\right)^4 \left(\frac{r-a}{r}\right)^4, \ E_\theta = \left(\frac{b}{b-a}\right)^4 \text{ et } \rho = \left(\frac{b}{b-a}\right)^4 \left(\frac{r-a}{r}\right)^2 \qquad (3)$$

r étant compris entre a et b.

La structure annulaire présente donc un module de Young E anisotrope et une masse volumique $\rho$ isotrope, E et $\rho$ variant en fonction du rayon uniquement.

Dans le document [2], la structure idéale définie par les équations (3) est approximée par une structure formée de plusieurs couches annulaires concentriques présentant des modules de Young respectifs croissants de la couche intérieure vers la couche extérieure. Toutefois, une structure formée de plusieurs couches annulaires concentriques ayant des modules de Young différents est plutôt difficile à réaliser, sachant que pour se rapprocher le plus possible de la structure idéale, le nombre de couches doit être le plus élevé possible.

Il est donc souhaitable de définir une structure apte à canaliser les ondes élastiques transversales se propageant dans une plaque mince, qui soit aisée à fabriquer.

Des modes de réalisation concernent un procédé selon la revendication 1 pour canaliser des ondes élastiques transversales autour d'une zone à isoler d'une plaque, comprenant une étape de formation autour de la zone à isoler d'une structure présentant un module de Young anisotrope et/ou une masse volumique hétérogène, les longueurs d'onde des ondes élastiques à canaliser étant grandes par rapport à l'épaisseur de la plaque, et petites par rapport aux autres dimensions de la plaque. Selon un mode de réalisation, le procédé comprend des étapes définition d'un maillage d'une zone périphérique entourant la zone à isoler, divisant la zone périphérique en plusieurs anneaux élémentaires centrés dans la zone à isoler, et en plusieurs secteurs angulaires élémentaires ayant pour origine un point de la zone à isoler, et de formation dans chaque maille délimitée par un secteur angulaire élémentaire et un anneau élémentaire, d'un élément de structure dans un matériau ayant un module de Young et/ou une masse volumique différents de ceux du matériau formant la plaque, les dimensions des mailles et des éléments de structure dans le plan de la plaque étant inférieures à la moitié des longueurs d'onde des ondes élastiques à canaliser.

Selon un mode de réalisation, le rapport entre les surfaces dans le plan de la plaque, de chacun des éléments de structure et d'une maille dans laquelle l'élément de structure est formé, est sensiblement constant dans toutes les mailles de la structure.

Selon un mode de réalisation, chacun des éléments de structure est réalisé en formant une perforation dans la plaque.

Selon un mode de réalisation, chacun des éléments de structure est réalisé en remplissant la perforation avec un matériau ayant un module de Young et/ou une masse volumique différents de ceux du matériau formant la plaque.

Selon un mode de réalisation, tous les éléments de structure de la structure sont réalisés dans un même matériau.

Des modes de réalisation concernent également une structure selon la revendication 6 pour canaliser des ondes élastiques transversales autour d'une zone à isoler d'une plaque, présentant un module de Young anisotrope et/ou une masse volumique hétérogène, les longueurs d'onde des ondes élastiques à canaliser étant grandes par rapport à l'épaisseur de la plaque, et petites par rapport aux autres dimensions de la plaque. Selon un mode de réalisation, la structure comprend un élément de structure formé dans chacune des mailles d'un maillage d'une zone périphérique entourant la zone à isoler, le maillage divisant la zone périphérique en plusieurs anneaux élémentaires centrés dans la zone à isoler, et en plusieurs secteurs angulaires élémentaires ayant pour origine un point de la zone à isoler, chaque élément de structure étant formé en un matériau ayant un module de Young et/ou une masse volumique différents de ceux du matériau formant la plaque, les dimensions des mailles et des éléments de structure dans le plan de la plaque étant inférieures à la moitié des longueurs d'onde des ondes élastiques à canaliser.

Selon un mode de réalisation, le rapport entre les surfaces dans le plan de la plaque, de chacun des éléments de structure et d'une maille dans laquelle l'élément de structure est formé, est sensiblement constant dans toutes les mailles de la structure.

Selon un mode de réalisation, chacun des éléments de structure est une perforation formée dans la plaque.

Selon un mode de réalisation, les éléments de structure sont en un matériau solide ayant un module de Young et/ou une masse volumique différents de ceux de la plaque.

Selon un mode de réalisation, les éléments de structure sont réalisés dans l'un ou l'autre de deux matériaux ayant des modules de Young et/ou des masses volumiques différents, et répartis de manière alternative suivant chaque anneau élémentaire et/ou suivant chaque secteur angulaire élémentaire.

Selon un mode de réalisation, la structure présente une forme circulaire, dans laquelle les éléments de structure sont répartis dans des mailles d'un maillage comprenant 6 à 11 anneaux élémentaires concentriques et 15 à 50 secteurs angulaires élémentaires centrés sur le centre des anneaux élémentaires.

Selon un mode de réalisation, la structure présente une forme circulaire de rayon extérieur compris entre 1 et 1.5 fois les longueurs d'onde des ondes élastiques à canaliser.

Des exemples de réalisation de l'invention seront décrits dans ce qui suit, à titre non limitatif en relation avec les figures jointes parmi lesquelles :

la figure 1A représente en vue de dessus une structure annulaire apte à canaliser des ondes élastiques autour d'une zone à isoler, selon un mode de réalisation,
la figure 1 B est une vue en coupe transversale de la structure annulaire de la figure 1A,
la figure 2 représente un maillage d'une zone dans laquelle est formée la structure annulaire,
la figure 2A représente une maille du maillage dans laquelle est formée un élément de structure,
la figure 3 représente en vue de dessus la structure annulaire et des chemins de propagation d'ondes élastiques transversales autour de la structure annulaire,
les figures 4A, 4B, 4C, 5A, 5B, 5C, 6A, 6B, 6C, 7A, 7B, 7C représentent la partie réelle d'un champ d'ondes élastiques, pour quatre longueurs d'onde différentes, en l'absence de structure, et en présence de la structure annulaire, et pour deux dimensions d'éléments structurels de la structure,
la figure 8A représente en vue de dessus une structure annulaire apte à canaliser des ondes élastiques autour d'une zone à isoler, selon un autre mode de réalisation,
la figure 8B est une vue en coupe transversale de la structure annulaire de la figure 8A.

Pour définir une structure apte à canaliser des ondes élastiques transversales se propageant dans une plaque mince, autour d'une zone à isoler, on se base sur les hypothèses suivantes :

la structure formée dans la plaque présente une forme annulaire, c'est-à-dire, cylindrique à section droite en forme de couronne circulaire entourant la zone à isoler, et
la ou les longueurs d'onde des ondes élastiques à canaliser sont grandes par rapport à l'épaisseur de la plaque dans laquelle est formée la structure annulaire, et petites par rapport aux autres dimensions de la plaque.

Par "structure annulaire" ou "anneau", il convient ici de comprendre un volume délimité par deux surfaces cylindriques incluses l'une dans l'autre, et par deux plans parallèles correspondant aux surfaces de la plaque, perpendiculaires aux surfaces cylindriques. Par surface cylindrique, il convient ici également de comprendre une surface définie dans l'espace par une droite gardant une direction fixe, appelée "génératrice", passant par un point variable décrivant une courbe plane fermée appelée "courbe directrice".

Ces hypothèses permettent d'appliquer la théorie de Von Karman. A l'intérieur de la zone à isoler, le déplacement $u_h(0,0,U_h(r,\theta))$, en coordonnées cylindriques $r$, $\theta$, $z$, d'un point de la plaque dans une direction $z$ perpendiculaire à la plaque, sous l'effet d'une onde élastique, est solution de l'équation différentielle suivante :

$$\lambda_h \nabla \cdot \left\{ \zeta_h^{-1} \nabla \left[ \lambda_h \nabla \cdot \left( \zeta_h^{-1} \nabla U_h \right) \right] \right\} - \beta_0^4 U_h = 0 \qquad (4)$$

l'origine des coordonnées étant située au centre de la zone protégée par la structure annulaire formée dans la plaque. Dans l'équation (4) :

$\varsigma_h$ est un tenseur de rang 2 de même dimension physique que $E^{-1/2}(r)$ et dont les coefficients diagonaux $\zeta_r$ et $\zeta_\theta$ permettent d'approcher le comportement imposé par les équations (3) au module de Young homogénéisé anisotrope $E(r)$ dans le plan de la plaque de la structure annulaire,

$\lambda_h = \int_0^1 \rho^{1/2} r dr$ , $\rho$ étant la masse volumique de la structure annulaire définie en fonction de la variable r,

$\nabla$ étant l'opérateur nabla ou différentiel en coordonnées cylindriques $(\dfrac{\partial}{\partial r}, \dfrac{1}{r}\dfrac{\partial}{\partial \theta})$,

$U_h$ est solution de l'équation (4), et

$\beta_0^4 = \omega^2 \rho_0 e / D_0$ , $\omega$ étant la pulsation des ondes élastiques, $\rho_0$ la masse volumique du matériau constituant la plaque, e l'épaisseur de la plaque, et $D_0$ la rigidité en flexion de la plaque.

Lorsque les ondes élastiques pénètrent dans la structure annulaire, elles subissent des ondulations périodiques rapides. Pour filtrer ces ondulations, le déplacement $U_h$ solution de l'équation (4) peut être représenté d'une manière macroscopique par la variable x = (r, $\theta$).

La structure annulaire homogénéisée est non seulement anisotrope, mais présente également un module de Young et une masse volumique variant spatialement en fonction du rayon r.

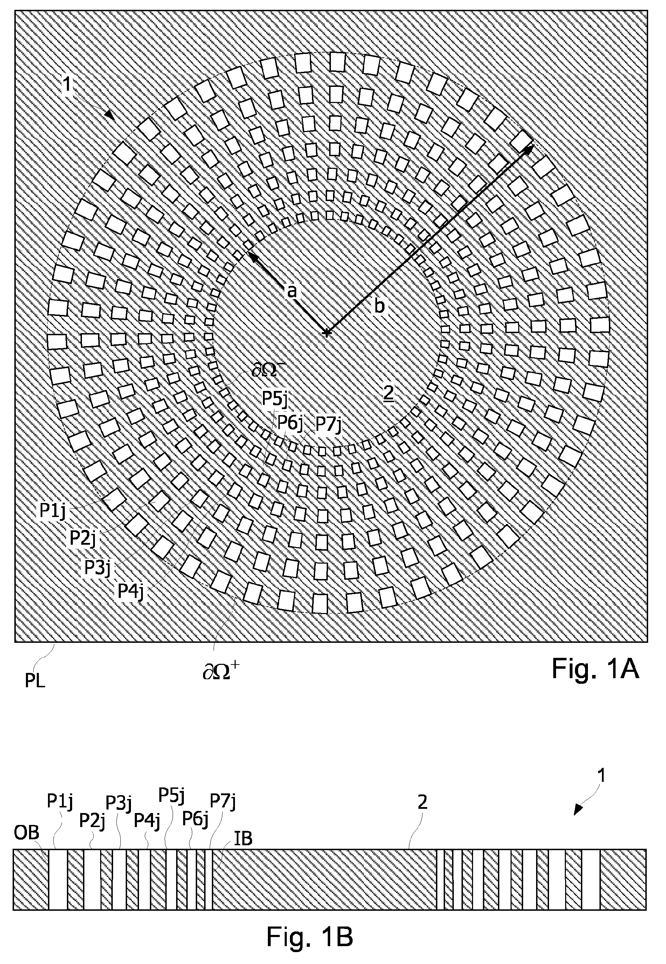

Les figures 1A, 1B représentent une plaque PL comprenant une structure annulaire 1 autour d'une zone à isoler 2 de la plaque PL. La structure 1 comprend une pluralité d'éléments de structure Pij répartis dans des anneaux concentriques autour d'une zone à protéger 2 de la plaque PL. Dans l'exemple des figures 1A et 1 B, la structure comporte 350 éléments de structure Pij répartis sur 7 anneaux circulaires concentriques (i étant compris entre 1 et 7 et j étant compris entre 1 et 50). Chacun des éléments de structure Pij présente une section droite en forme de secteur annulaire, et s'étend perpendiculairement au plan de la plaque PL.

Dans un mode de réalisation, chacun des éléments de structure Pij comprend une perforation de la plaque PL. Les perforations sont réalisées perpendiculairement au plan de la plaque PL.

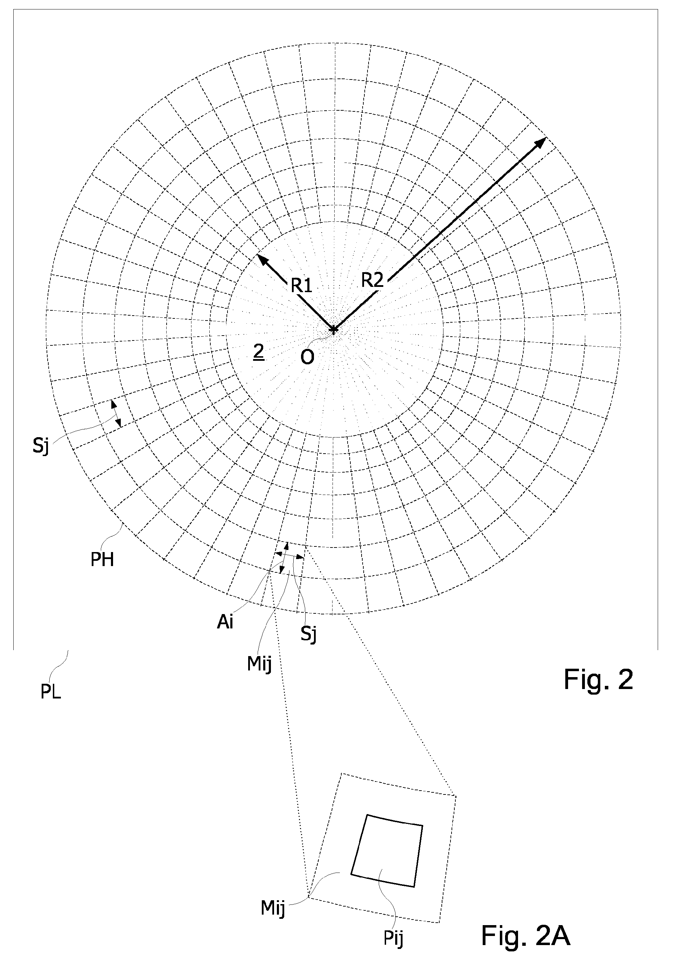

La structure annulaire 1 peut être formée en définissant un maillage d'une zone annulaire périphérique PH entourant la zone à isoler 2 de la plaque. Un tel maillage est représenté sur la figure 2. La zone périphérique PH peut être définie dans un repère de coordonnées polaires (O, r, $\theta$) dans le plan de la plaque, centré sur le centre O de la zone à isoler 2, par l'ensemble de points de coordonnées (r, $\theta$) tels que r est compris entre des rayons intérieur R1 et extérieur R2 de la zone PH. Le maillage est défini en divisant la zone PH en plusieurs anneaux élémentaires Ai centrés sur le centre O de la zone à isoler 2, et en divisant la zone PH en une pluralité de secteurs angulaires élémentaires Sj ayant pour origine le centre O. Le maillage comprend ainsi une pluralité de mailles Mij en forme de secteur annulaire, chaque maille Mij étant délimitée par un secteur angulaire élémentaire Sj et par un anneau élémentaire Aj. La structure annulaire 1 peut être ensuite réalisée en formant dans chaque maille Mij, un élément de structure Pij dans un matériau ayant un module de Young et/ou une masse volumique différents de ceux du matériau formant la plaque PL. Une maille Mij comprenant un élément de structure Pij est représentée sur la figure 2A. Les dimensions (dans le plan de la plaque PL) des mailles Mij et des éléments de structure Pij peuvent être inférieures à la moitié des longueurs d'ondes des ondes élastiques à canaliser.

Dans un mode de réalisation, le rapport entre les surfaces, dans le plan de la plaque (PL), de chacun des éléments de structure Pij et de la maille Mij dans laquelle l'élément de structure est formé, est sensiblement constant (à 10 % près) dans toutes les mailles de la structure 1.

Il peut être démontré que les caractéristiques de la structure 1 tendent vers celles d'une structure idéale, définies par les équations (3) lorsque les dimensions des mailles (Mij) et donc des éléments de structure Pij tendent vers 0.

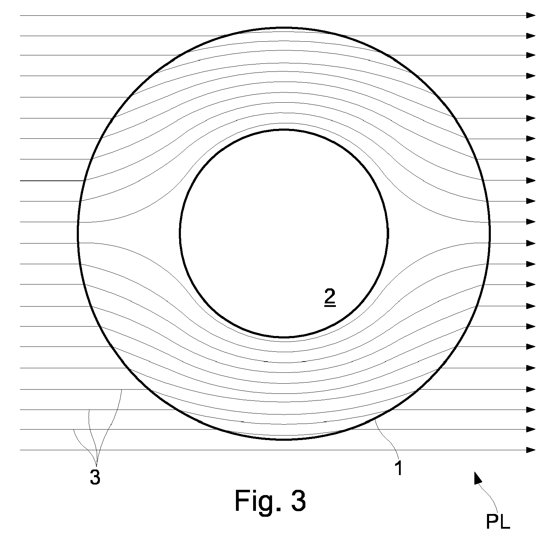

La figure 3 représente la structure annulaire 1 formée dans la plaque PL soumise à des ondes élastiques transversales. La figure 3 montre des trajectoires de propagation 3 des ondes élastiques appliquées à la plaque PL. La forme de ces trajectoires 3 montre que les ondes élastiques arrivent sur la structure 1 sensiblement parallèlement les unes aux autres et ressortent de la structure comme si la structure était absente. Dans la structure, les ondes élastiques sont déviées en contournant la zone centrale 2.

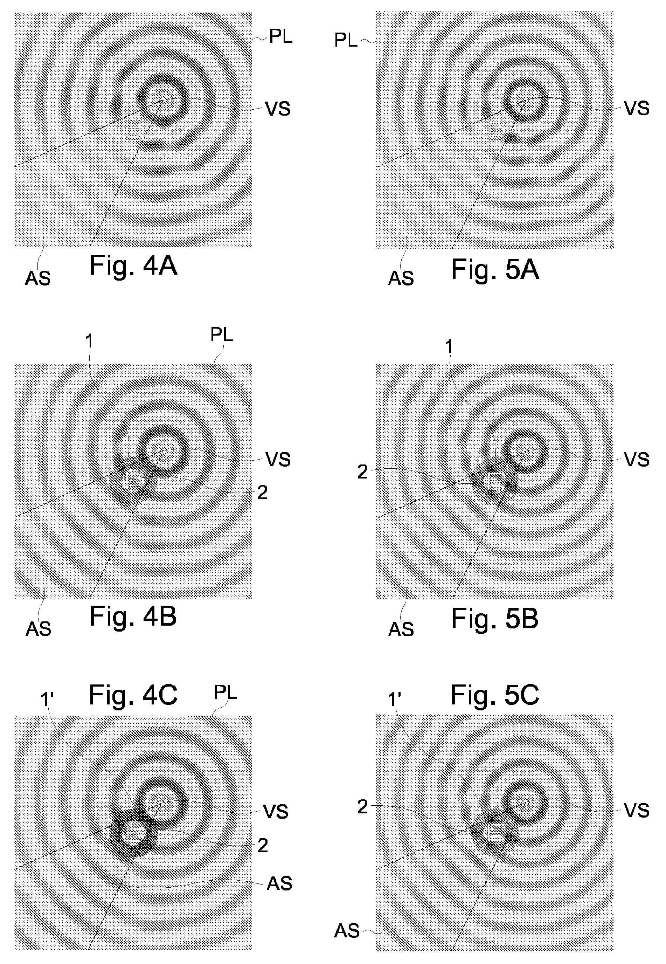

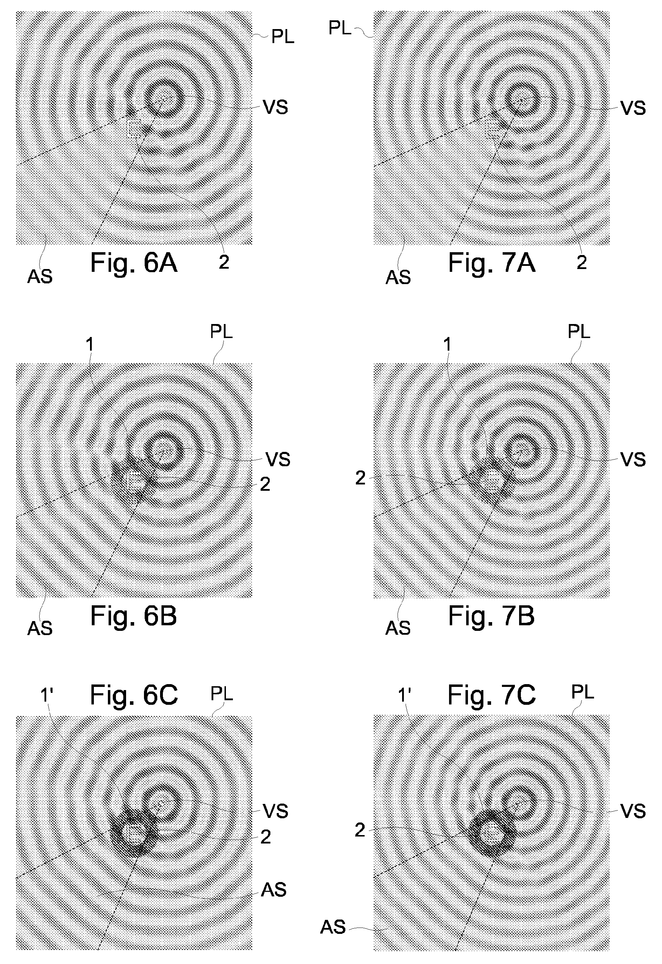

Les figures 4A à 7C représentent la plaque PL fixée en son centre par une zone en forme de E, et la distribution sur la surface de la plaque PL de la partie réelle d'un déplacement U de la plaque perpendiculairement à celle-ci, sous l'effet d'ondes élastiques émises par une source VS en un point de la plaque, de coordonnées cartésiennes (0.5, 0.5) (en unités de longueur - u.l.). Sur les figures 4A à 4C, les ondes élastiques présentent une longueur d'onde de 0.42 u.l.. Sur les figures 5A à 5C, les ondes élastiques présentent une longueur d'onde de 0.36 u.l.. Sur les figures 6A à 6C, les ondes élastiques présentent une longueur d'onde de 0.31 u.l. Sur les figures 7A à 7C, les ondes élastiques présentent une longueur d'onde de 0.28 u.l..

Sur les figures 4A, 5A, 6A et 7A, la plaque PL ne comporte pas de structure annulaire de canalisation des ondes élastiques. Dans une direction opposée au centre fixe de la plaque, il peut être remarqué que les ondes se propagent librement à partir de la source VS sous la forme d'ondes circulaires concentriques centrées sur la source VS. Les ondes apparaissent atténuées dans une zone AS d'un secteur angulaire issu de la source VS, et de largeur minimum incluant la zone centrale fixe E, la zone AS étant située à l'opposé de la source VS par rapport à la zone E. La zone fixe E produit donc un effet de "masquage" des ondes dans la zone AS. De part et d'autre de la zone AS dans des directions sensiblement opposées, les ondes apparaissent déformées et légèrement atténuées. Sur les figures 4B, 4C, 5B, 5C, 6B, 6C, 7B et 7C, une structure annulaire 1 de rayon interne a = 0.2 u.l. est formée autour de la zone E. La zone E se trouve ainsi dans la zone centrale 2 de la structure. Sur les figures 4B, 5B, 6B et 7B, la structure présente un rayon externe b = 0.39 u.l. et comprend environ 100 perforations réparties sur 6 anneaux élémentaires concentriques, soit 16 ou 17 perforations par anneau élémentaire. Sur les figures 4C, 5C, 6C et 7C, la structure présente un rayon externe b = 0,4 u.l. et comprend environ 200 perforations réparties sur 11 anneaux élémentaires concentriques, soit 18 ou 19 perforations par anneau élémentaire.

Les figures 4B, 4C, 5B, 5C, 6B, 6C, 7B et 7C montrent que grâce à la structure 1, l'effet de masquage produit par la zone E dans la zone AS a quasiment disparu. Seules subsistent quelques déformations de la forme circulaire des ondes qui se trouvent également atténuées par rapport aux déformations constatées sur les figures 4A, 5A, 6A, 7A en l'absence de la structure 1. Ces déformations se trouvent en partie dues aux déphasages résultant du fait que les ondes traversant et faisant le tour de la partie centrale 2 de la structure présentent des trajets allongés par rapport aux ondes ne traversant pas cette structure. En outre, les déformations de la forme circulaire des ondes apparaissent également légèrement plus atténuées sur les figures 4C, 5C, 6C et 7C que sur les figures 4B, 5B, 6B et 7B. La structure se trouve donc plus efficace à canaliser les ondes élastiques en augmentant son nombre d'éléments, et donc en diminuant la taille de ses éléments. Il peut également être observé que les effets de la présence de la zone fixe E se trouvent en majeure partie masqués par la structure 1, vis-à-vis d'ondes élastiques dont la longueur d'onde est située entre sensiblement 1 fois (figures 4A-4C) fois et 0.7 fois (figures 7A, 7C) le rayon externe b de la structure 1. En d'autres termes, le rayon extérieur b de la structure 1 peut être compris entre 1 et 1,5 fois les longueurs d'ondes des ondes élastiques à canaliser.

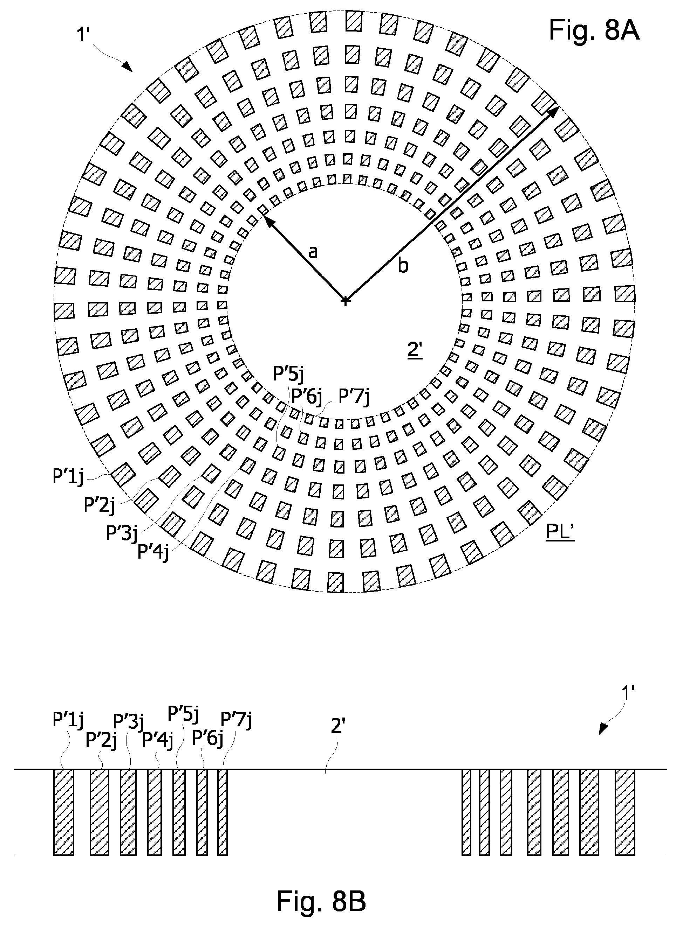

Les figures 8A et 8B représentent une structure 1' permettant de canaliser des ondes élastiques autour d'une zone 2' d'une plaque PL', selon un autre mode de réalisation. La structure 1' diffère de la structure 1 en ce que les perforations Pij sont remplacées par des plots P'ij qui sont plantés dans la plaque PL' autour de la zone 2'. Les plots P'ij peuvent être réalisés en formant des perforations dans la plaque PL' et en remplissant les perforations d'un matériau ayant un module de Young et/ou une masse volumique différentes de celles de la plaque. La structure 1' présente sensiblement les mêmes propriétés que la structure 1 vis-à-vis des ondes élastiques transversales.

La présente invention s'applique notamment aux systèmes mécaniques dans lesquels un ensemble doit être isolé d'un autre ensemble soumis à des vibrations. A cet effet, une ou plusieurs zones de contact entre les deux ensembles peuvent être isolées de l'autre par une structure telle que celle représentée sur les figures 1A, 1B. Les plaques dans lesquelles sont formées les structures peuvent être métalliques ou non métallique. Les perforations Pij peuvent être remplies d'un matériau distinct du matériau formant la plaque. Par matériau distinct, il convient ici de comprendre un matériau présentant une masse volumique et/ou un module de Young distincts de ceux de la plaque.

La présente invention s'applique également à la protection de bâtiments contre des ondes sismiques. A cet effet, un ou plusieurs bâtiments peuvent être entourés par une structure telle que celle représentée sur les figures 8A, 8B dans laquelle les plots peuvent être réalisés par exemple en béton et être enfoncés dans le sol. Une structure de protection sismique de bâtiments peut également être réalisée par une plaque par exemple en béton munie de perforations comme représentée sur les figures 1A, 1B.

Il apparaîtra clairement à l'homme de l'art que la présente invention est susceptible de diverses variantes de réalisation et diverses applications. En particulier, la structure annulaire de l'invention n'est pas nécessairement une structure à section droite en forme d'anneau circulaire. La section droite de la structure peut également présenter d'autres formes telles qu'une forme en anneau elliptique, ou une forme délimitée par deux rectangles imbriqués dont les grands côtés (ou petits côtés) sont parallèles. Il importe simplement que la section droite de la structure présente une symétrie telle qu'il existe un repère de coordonnées dans lequel les coordonnées de chacun des points de la structure sont indépendantes. De même, les éléments de la structure présentent une forme correspondant à une division de la structure suivant les deux coordonnées choisies. Dans une structure de section droite rectangulaire, les coordonnées choisies sont des coordonnées cartésiennes et les éléments de la structure sont de section droite rectangulaire.

Les éléments de structure Pij peuvent également être réalisés dans plusieurs matériaux solides ou liquides ayant différents modules de Young et/ou masses volumiques. Par exemple, la structure annulaire peut comprendre des éléments de structure Pij réalisés dans l'un ou l'autre de deux matériaux différents, et répartis de manière alternative suivant chaque anneau élémentaire Ai et/ou suivant chaque secteur angulaire élémentaire Sj.

Il n'est pas non plus nécessaire que les anneaux élémentaires Ai soient concentriques ou de largeur constante, ni que les secteurs angulaires élémentaires Sj soient de largeurs identiques ou issus d'un même point. En effet, ces caractéristiques ont été supposées pour des besoins de simplification des calculs de modélisation, mais peuvent ne pas être respectées dans une réalisation d'une structure selon l'invention. Il importe simplement que les contours intérieur et extérieur de chacun des anneaux Ai soient centrés dans la zone à isoler 2, que les secteurs Sj soient issus d'un point de la zone 2, et que les dimensions des mailles ainsi formées soient inférieures à la moitié des longueurs d'onde des ondes élastiques à canaliser.

En tout état de cause, l'homme du métier peut en procédant à de simples simulations, tester l'efficacité d'une structure particulière, pour canaliser des ondes élastiques dans une plage de longueurs d'ondes donnée.

**Revendications**

1. Procédé pour canaliser des ondes élastiques transversales autour d'une zone à isoler d'une plaque (PL), comprenant une étape de formation autour de la zone à isoler (2) d'une structure (1, 1') présentant un module de Young anisotrope et/ou une masse volumique hétérogène, les longueurs d'onde des ondes élastiques à canaliser étant grandes par rapport à l'épaisseur de la plaque, et petites par rapport aux autres dimensions de la plaque, **caractérisé en ce qu'**il comprend des étapes définition d'un maillage d'une zone périphérique (PH) entourant la zone à isoler (2), divisant la zone périphérique en plusieurs anneaux élémentaires (Ai) centrés dans la zone à isoler, et en plusieurs secteurs angulaires élémentaires (Sj) ayant pour origine un point de la zone à isoler, et de formation dans chaque maille (Mij) délimitée par un secteur angulaire élémentaire et un anneau élémentaire, d'un élément de structure (Pij) dans un matériau ayant un module de Young et/ou une masse volumique différents de ceux du matériau formant la plaque (PL), les dimensions des mailles et des éléments de structure dans le plan de la plaque étant inférieures à la moitié des longueurs d'onde des ondes élastiques à canaliser.

2. Procédé selon la revendication 1, dans lequel le rapport entre les surfaces dans le plan de la plaque (PL), de chacun des éléments de structure (Pij) et d'une maille (Mij) dans laquelle l'élément de structure est formé, est sensiblement constant dans toutes les mailles de la structure (1).

3. Procédé selon la revendication 1 ou 2, dans lequel chacun des éléments de structure (Pij) est réalisé en formant une perforation dans la plaque (PL).

4. Procédé selon la revendication 3, dans lequel chacun des éléments de structure (Pij) est réalisé en remplissant la perforation avec un matériau ayant un module de Young et/ou une masse volumique différents de ceux du matériau formant la plaque (PL).

5. Procédé selon l'une des revendications 1 à 4, dans lequel tous les éléments de structure (Pij) de la structure (1) sont réalisés dans un même matériau.

6. Structure pour canaliser des ondes élastiques transversales autour d'une zone à isoler (2) d'une plaque (PL), la structure (1, 1') présentant un module de Young anisotrope et/ou une masse volumique hétérogène, les longueurs d'onde des ondes élastiques à canaliser étant grandes par rapport à l'épaisseur de la plaque, et petites par rapport aux autres dimensions de la plaque, **caractérisée en ce qu'**elle comprend, dans une zone périphérique (PH) entourant la zone à isoler (2), un maillage divisant la zone périphérique en plusieurs anneaux élémentaires (Ai) centrés dans la zone à isoler, et en plusieurs secteurs angulaires élémentaires (Sj) ayant pour origine un point de la zone à isoler, et dans chaque maille (Mij) délimitée par un secteur angulaire élémentaire et un anneau élémentaire, un élément de structure (Pij) formé en un matériau ayant un module de Young et/ou une masse volumique différents de ceux du matériau formant la plaque (PL), les dimensions des mailles et des éléments de structure dans le plan de la plaque étant inférieures à la moitié des longueurs d'onde des ondes élastiques à canaliser.

7. Structure selon la revendication 6, dans laquelle le rapport entre les surfaces dans le plan de la plaque (PL), de chacun des éléments de structure (Pij) et d'une maille (Mij) dans laquelle l'élément de structure est formé, est sensiblement constant dans toutes les mailles de la structure (1).

8. Structure selon l'une des revendications 6 et 7, chacun des éléments de structure (Pij) est une perforation formée dans la plaque (PL).

9. Structure selon l'une des revendications 6 à 8, dans laquelle les éléments de structure (Pij) sont en un matériau solide ayant un module de Young et/ou une masse volumique différents de ceux de la plaque (PL).

10. Structure selon l'une des revendications 6 à 9, dans laquelle les éléments de structure (Pij) sont réalisés dans l'un ou l'autre de deux matériaux ayant des modules de Young et/ou des masses volumiques différents, et répartis de manière alternative suivant chaque anneau élémentaire (Ai) et/ou suivant chaque secteur angulaire élémentaire (Sj).

11. Structure selon l'une des revendications 6 à 10, de forme circulaire et dans laquelle les éléments de structure (Pij) sont répartis dans des mailles (Mij) d'un maillage comprenant 6 à 11 anneaux élémentaires (Ai) concentriques et 15 à 50 secteurs angulaires élémentaires (Sj) centrés sur le centre (O) des anneaux élémentaires.

12. Structure selon l'une des revendications 6 à 11, de forme circulaire et présentant un rayon extérieur (b) compris entre 1 et 1.5 fois les longueurs d'onde des ondes élastiques à canaliser.

**Patentansprüche**

1. Verfahren zum Leiten elastischer Querwellen um eine zu isolierende Zone einer Platte (PL) herum, umfassend einen Schritt der Bildung einer einen anisotropen Elastizitätsmodul und/oder eine heterogene Volumenmasse aufweisenden Struktur (1, 1') um die zu isolierende Zone (2) herum, wobei die Wellenlänge der elastischen zu leitenden Wellen groß im Verhältnis zur Plattendicke und klein im Verhältnis zu den anderen Abmessungen der Platte sind, **dadurch gekennzeichnet, dass** es Schritte der Definition einer Maschenbildung einer die zu isolierende Zone (2) umgebenden Randzone (PH) umfasst, die die Randzone in mehrere in der zu isolierenden Zone zentrierte Elementarringe (Ai) und in mehrere einen Punkt der zu isolierenden Zone als Anfangspunkt habende Elementarecksektoren (Sj) teilen, und der Bildung in jeder von einem Elementarecksektor und einem Elementarring begrenzten Masche (Mij) eines Strukturelements (Pij) aus einem Material, das einen Elastizitätsmodul und/oder eine Volumenmasse aufweist, die verschieden von denen des die Platte (PL) bildenden Materials sind, wobei die Abmessungen der Maschen und der Strukturelemente in der Ebene der Platte kleiner sind als die Hälfte der Wellenlänge der elastischen zu leitenden Wellen.

2. Verfahren nach Anspruch 1, bei dem das Verhältnis zwischen den in der Ebene der Platte (PL) liegenden Flächen jedes der Strukturelemente (Pij) und einer Masche (Mij), in der das Strukturelement gebildet ist, im Wesentlichen konstant in allen Maschen der Struktur (1) ist.

3. Verfahren nach Anspruch 1 oder 2, bei dem jedes der Strukturelemente (Pij) ausgeführt wird, indem eine Perforation in die Platte (PL) gebohrt wird.

4. Verfahren nach Anspruch 3, bei dem jedes der Strukturelemente (Pij) ausgeführt wird, indem die Perforation mit einem Material gefüllt wird, das einen Elastizitätsmodul und/oder eine Volumenmasse aufweist, die verschieden von denen des die Platte (PL) bildenden Materials sind.

5. Verfahren nach einem der Ansprüche 1 bis 4, bei dem alle Strukturelemente (Pij) der Struktur (1) in einem selben Material ausgeführt sind.

6. Struktur zum Leiten elastischer Querwellen um eine zu isolierende Zone (2) einer Platte (PL) herum, wobei die Struktur (1, 1') einen anisotropen Elastizitätsmodul und/oder eine heterogene Volumenmasse aufweist, wobei die Wellenlänge der elastischen zu leitenden Wellen groß im Verhältnis zur Plattendicke und klein im Verhältnis zu den anderen Abmessungen der Platte sind, **dadurch gekennzeichnet, dass** sie in einer die zu isolierende Zone (2) umgebenden Randzone (PH) eine Maschenbildung umfasst, die die Randzone in mehrere in der zu isolierenden Zone zentrierte Elementarringe (Ai) und in mehrere einen Punkt der zu isolierenden Zone als Anfangspunkt habende Elementarecksektoren (Sj) teilen, und in jeder von einem Elementarecksektor und einem Elementarring begrenzten Masche (Mij) ein Strukturelement (Pij) umfasst, das aus einem Material gebildet wird, das einen Elastizitätsmodul und/oder eine Volumenmasse aufweist, die verschieden von denen des die Platte (PL) bildenden Materials sind, wobei die Abmessungen der Maschen und der Strukturelemente in der Ebene der Platte kleiner sind als die Hälfte der Wellenlänge der elastischen zu leitenden Wellen.

7. Struktur nach Anspruch 6, bei der das Verhältnis zwischen den in der Ebene der Platte (PL) liegenden Flächen jedes der Strukturelemente (Pij) und einer Masche (Mij), in der das Strukturelement gebildet ist, im Wesentlichen konstant in allen Maschen der Struktur (1) ist.

8. Struktur nach einem der Ansprüche 6 und 7, bei der jedes der Strukturelemente (Pij) eine in der Platte (PL) gebohrte Perforation ist.

9. Struktur nach einem der Ansprüche 6 bis 8, bei der die Strukturelemente (Pij) aus einem festen Material bestehen, das einen Elastizitätsmodul und/oder eine Volumenmasse aufweist, die verschieden von denen der Platte (PL) sind.

10. Struktur nach einem der Ansprüche 6 bis 9, bei der die Strukturelemente (Pij) aus dem einen oder dem anderen von zwei Materialien ausgeführt sind, die verschiedene Elastizitätsmodule und/oder Volumenmassen aufweisen, und die abwechselnd nach jedem Elementarring (Ai) und/oder nach jedem Elementarecksektor (Sj) verteilt sind.

11. Struktur nach einem der Ansprüche 6 bis 10, die kreisförmig ist und bei der die Strukturelemente (Pij) in Maschen (Mij) einer Maschenbildung verteilt sind, die 6 bis 11 konzentrische Elementarringe (Ai) und 15 bis 50 auf das Zentrum (O) der Elementarringe zentrierte Elementarecksektoren (Sj) aufweist.

12. Struktur nach einem der Ansprüche 6 bis 11, die kreisförmig ist und einen Außenradius (b) aufweist, der zwischen 1 und 1,5-mal die Wellenlängen der elastischen zu leitenden Wellen liegt.


**Claims**

1. Method for bending transversal elastic waves around a zone to isolate of a plate (PL), comprising a step of forming, around the zone to isolate (2), a structure (1, 1') presenting an anisotropic Young's modulus and/or heterogeneous mass density, the wavelengths of the elastic waves to bend being large with respect to the thickness of the plate and small with respect to the other dimensions of the plate,
   **characterized in that** it comprises steps of defining a meshing of a peripheral zone (PH) surrounding the zone to isolate (2), dividing the peripheral zone into several elementary rings (Ai) centered on the zone to isolate and into several elementary angular sectors (Sj) having as their origin a point of the zone to isolate, and of forming in each mesh (Mij) delimited by an elementary angular sector and an elementary ring, a structural element (Pij) in a material having a Young's modulus and/or a mass density different than those of the material forming the plate (PL), the dimensions of the meshes and of the structural elements in the plane of the plate being less than half the wavelength of the elastic waves to bend.

2. Method according to claim 1, wherein the ratio between the surfaces in the plane of the plate (PL) of each of the structural elements (Pij) and of a mesh (Mij) in which the structural element is formed, is significantly constant for each of the meshes of the structure (1).

3. Method according to claim 1 or 2, wherein each of the structural elements (Pij) is made by making a perforation in the plate (PL).

4. Method according to claim 3, wherein each of the structural elements (Pij) is made by filling the perforation with a material having a Young's modulus and/or a density different than those of the material forming the plate (PL).

5. Method according to one of claims 1 to 4, wherein all the structural elements (Pij) of the structure (1) are made of a same material.

6. Structure for bending transversal elastic waves around a zone to isolate (2) of a plate (PL), the structure (1,1') having an anisotropic Young's modulus and/or a heterogeneous mass density, the wavelengths of the elastic waves to bend being large with respect to the thickness of the plate and small with respect to the other dimensions of the plate
   **characterized in that** it comprises in a peripheral zone (PH) surrounding the zone to isolate (2) a meshing dividing the peripheral zone into several elementary rings (Ai) centered on the zone to isolate and into several elementary angular sectors (Sj) having as their origin a point of the zone to isolate, and in each mesh (Mij) delimited by an elementary angular sector and an elementary ring, a structural element (Pij) formed in a material having a Young's modulus and/or a mass density different than those of the material forming the plate (PL), the dimensions of the meshes and of the structural elements in the plane of the plate being less than half the wavelength of the elastic waves to bend.

7. Structure according to claim 6, wherein the ratio between the surfaces in the plane of the plate (PL) of each of the structural elements (Pij) and of a mesh (Mij) in which the structural element is formed, is significantly constant for each of the meshes of the structure (1).

8. Structure according to one of claims 6 and 7, wherein each of the structural elements (Pij) is a perforation formed in the plate (PL).

9. Structure according to one of claims 6 to 8, wherein the structural elements (Pij) are in a solid material having a Young's modulus and/or a mass density different than those of the plate (PL).

10. Structure according to one of claims 6 to 9, wherein the structural elements (Pij) are made of one or another of two materials having different Young's moduli and/or densities, and are arranged in an alternating manner following each elementary ring (Ai) and/or following each elementary angular sector (Sj).

11. Structure according to one of claims 6 to 10, of a circular form and wherein the structural elements (Pij) are arranged in meshes (Mij) of a meshing comprising 6 to 11 concentric elementary rings (Ai) and 15 to 50 elementary angular sectors (Sj) centered on the center (O) of the elementary rings.

12. Structure according to one of claims 6 to 11, of a circular form and having an exterior radius (b) comprised between 1 and 1.5 times the wavelengths of the elastic waves to bend.

Fig. 1A

Fig. 1B

Fig. 2

Fig. 2A

Fig. 3

PL

VS

AS

Fig. 4A

PL

VS

AS

Fig. 5A

1

PL

VS

2

AS

Fig. 4B

1

VS

2

AS

Fig. 5B

1'

Fig. 4C

PL

VS

2

AS

1'

Fig. 5C

2

VS

AS

Fig. 6A

Fig. 7A

Fig. 6B

Fig. 7B

Fig. 6C

Fig. 7C

Fig. 8A

1'

a

b

2'

P'5j
P'6j  P'7j

P'1j

P'2j

P'3j
P'4j

PL'

1'

P'1j    P'3j    P'5j    P'7j    2'
   P'2j      P'4j    P'6j

Fig. 8B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080024792 A
- US 20080165442 A
- US 20090218523 A


**Littérature non-brevet citée dans la description**

- **M. BRUN ; S. GUENNEAU ; A. B. MOVCHAN.** Achieving control of in-plane elastic waves. *Applied Physics Letters,* 2009, vol. 94, 061903
- **M. FARHAT ; S. GUENNEAU ; S. ENOCH.** Ultra-broadband Elastic Cloaking in Thin Plates. *Physical Review Letters,* 2009, vol. 103, 024301
- **VON KARMAN.** Theory of plates and shells. Mc-Graw-Hill, 1940
- **K. F. GRAFF.** Wave motion in elastic solids. Dover, 1975
- **DANIEL TORRENT et al.** Acoustic cloaking in two dimensions: a feasible approach. *new journal of physics,* 2008